# EUROPEAN PATENT SPECIFICATION

(11) **EP 4 071 855 B1**
(45) Date of publication and mention of the grant of the patent: **06.05.2026**
(21) Application number: 20955832.9
(22) Date of filing: 30.09.2020
(51) Int. Cl.: H01M 4/136, H01M 4/1397, H01M 4/505, H01M 4/58, H01M 4/525, H01M 4/04, H01M 4/36

(54) **MIXED POSITIVE ELECTRODE MATERIAL, POSITIVE ELECTRODE PLATE AND PREPARATION METHOD THEREOF, BATTERY, AND APPARATUS**
GEMISCHTES POSITIVES ELEKTRODENMATERIAL, POSITIVES ELEKTRODENBLATT UND HERSTELLUNGSVERFAHREN DAFÜR, BATTERIE UND VORRICHTUNG
MATÉRIAU D'ÉLECTRODE POSITIVE MÉLANGÉ, FEUILLE D'ÉLECTRODE POSITIVE ET SON PROCÉDÉ DE FABRICATION, BATTERIE ET DISPOSITIF

(43) Date of publication of application: 12.10.2022
(73) Proprietor: Contemporary Amperex Technology (Hong Kong) Limited, Central, Central And Western District (HK)
(72) Inventor: BIE, Changfeng, Ningde, Fujian 352100 (CN); HU, Xia, Ningde, Fujian 352100 (CN); LIU, Qian, Ningde, Fujian 352100 (CN); LIU, Na, Ningde, Fujian 352100 (CN); XU, Xiaofu, Ningde, Fujian 352100 (CN); NI, Huan, Ningde, Fujian 352100 (CN)
(74) Representative: Lorenz Seidler Gossel Part. mbB
(86) International application number: PCT/CN2020/119743
(87) International publication number: WO 2022/067812

(56) References cited:
- CN-A- 103 456 918
- CN-A- 107 528 050
- CN-A- 108 258 207
- CN-A- 109 411 716
- CN-A- 109 411 716
- CN-A- 111 048 760
- US-B2- 10 243 196
- ETIEMBLE A ET AL: "Multiscale morphological characterization of process induced heterogeneities in blended positive electrodes for lithium-ion batteries", JOURNAL OF MATERIAL SCIENCE, KLUWER ACADEMIC PUBLISHERS, DORDRECHT, vol. 52, no. 7, 14 September 2016 (2016-09-14), pages 3576 - 3596, XP036140283, ISSN: 0022-2461, [retrieved on 20160914], DOI: 10.1007/S10853-016-0374-X

## Description

### TECHNICAL FIELD

This application relates to the technical field of lithium-ion batteries, and in particular, to a mixed positive electrode material, a positive electrode plate and a preparation method thereof, a battery, and an apparatus.

### BACKGROUND

Lithium-ion batteries are highly competitive in the field of secondary batteries due to their advantages such as high energy density, long cycle life, no memory effect, and environmental friendliness, widely used in terminal electronic products such as mobile phones and notebook computers with increasing application in fields such as electric vehicles and large-scale energy storage devices. As positive electrode materials for lithium-ion batteries, the more mature and commonly used materials are the lithium iron phosphate material system (such as lithium iron phosphate or doped lithium iron phosphate materials) and the ternary material system (such as lithium nickel cobalt manganate and lithium nickel cobalt aluminate system materials). Lithium-ion batteries with materials of the ternary system as their positive electrode active materials received attention of the industry and became a direction of research over a specific development period due to their higher energy density and better power performance. However, materials of both systems have their own strengths and weaknesses. As perception and research deepens, how to make use of their respective advantages has begun to attract attention.
US 10 243 196 B2 discloses electrolyte secondary battery including a positive electrode mixture layer consisting of a first layer, the first layer contains lithium iron phosphate and lithium nickel cobalt manganese composite oxide. ETIEMBLE A ET AL: "Multiscale 1-15 morphological characterization of process induced heterogeneities in blended positive electrodes for lithium-ion batteries", JOURNAL OF MATERIAL SCIENCE, KLUWER ACADEMIC PUBLISHERS, DORDRECHT, vol. 52, no. 7, 14 September 2016 describes the morphological characterization of blended positive electrodes containing lithium iron phosphate and nickel cobalt manganese composite oxide.

CN 109 411 716 A suggest a positive active material including a first active material and a second active material. The first active material comprises at least one of lithium manganate, lithium cobaltate, lithium iron phosphate and the second active material may be selected from NCM622 or NCM 811.

However, how performance of lithium-ion batteries can be improved and stabilized to ensure their electrical performance and guarantee good processing during preparation has become one of the technical problems to be solved urgently.

### SUMMARY

This application provides a mixed positive electrode material, by screening and reasonably matching types and microscopic morphologies of used materials, the problem that different types of materials are easy to agglomerate at mixing is resolved, so that the mixed positive electrode material has good miscibility and ease of processing, helping ensure improved safety performance and cycle life of lithium-ion batteries.

This application further provides a positive electrode plate, which is prepared by using the mixed positive electrode material of this application, and able to improve uniform distribution of the positive electrode material on the positive electrode plate, and better satisfy electrochemical performance of lithium-ion batteries.

This application further provides a preparation method of a positive electrode plate. The preparation method of this application uses the mixed positive electrode material of this application, which is able to improve uniform distribution of the positive electrode material on the positive electrode plate, improve performance of the electrode plate, and better satisfy electrochemical performance of lithium-ion batteries.

This application further provides a battery using the positive electrode plate of this application, which has good electrochemical performance with increased energy density.

This application further provides an apparatus including the battery of this application, where the battery is configured to provide power for the apparatus and/or serve as an energy storage unit of the apparatus.

The following technical solutions are proposed in this application.

This application provides a mixed positive electrode material, including a mixed component consisting of a material of lithium iron phosphate chemical system and a material of ternary chemical system, where the material of lithium iron phosphate chemical system is secondary particles of low specific surface area with an average specific surface area between 3.5 m²/g and 6 m²/g.

The secondary particles of the lithium iron phosphate material used in this application should also be understood as material particles agglomerated due to processing. In a specific embodiment, the secondary particles may be secondary particles resulting from hard agglomeration of nanoscale primary particles of lithium iron phosphate chemical system.

In some embodiments of this application, a specific surface area of the secondary particles of lithium iron phosphate chemical system may be 5 m²/g, 4 m²/g, or 3 m²/g. In this application, when the secondary particles of lithium iron phosphate chemical system whose specific surface area is within the foregoing range are mixed with the material of ternary chemical system, problems such as uneven coating on the positive electrode plate due to high viscosity of slurry caused by agglomeration during slurrying can be avoided, thereby improving feasibility of processing the mixed positive electrode material.

In some embodiments of this application, a particle size distribution of the secondary particles of lithium iron phosphate chemical system satisfies 0.1≤Dᵥ50/(Dᵥ90-Dᵥ10)≤10, further, 0.3≤Dᵥ50/(Dᵥ90-Dᵥ10)≤5, and further 0.5≤Dᵥ50/(Dᵥ90-Dᵥ10)≤1. In this application, when the particle size distribution of the secondary particles of lithium iron phosphate chemical system is within the foregoing range, the obtained mixed positive electrode material is more conducive to forming a uniform mixed positive electrode slurry during slurrying.

In some embodiments of this application, Dᵥ10 and Dᵥ90 can be further defined to control proportions of particles with small particle sizes and particles with large particle sizes, so that slurry processing of a mixed system of the secondary particles of lithium iron phosphate chemical system and the material of ternary chemical system can be further optimized. For example, the particle size distribution of the secondary particles of lithium iron phosphate chemical system may satisfy Dᵥ10≥0.6 µm and Dᵥ90≤30 µm; for example, Dᵥ10≥0.8 µm and Dᵥ90≤25 µm; and further for example, Dᵥ10≥1 µm and Dᵥ90≤20 µm; Dᵥ10≥1.2 µm and Dᵥ90≤25 µm; Dᵥ10≥2 µm and Dᵥ90≤22 µm; Dᵥ10≥3 µm and Dᵥ90≤18 µm; Dᵥ10≥4 µm and Dᵥ90≤15 µm; and Dᵥ10≥5 µm and Dᵥ90≤12 µm.

In some embodiments of this application, a median particle size of the secondary particles of lithium iron phosphate chemical system satisfies 2 µm≤Dᵥ50≤9 µm, for example, 3 µm≤Dᵥ50≤6 µm, 2 µm≤Dᵥ50≤4 µm, 4 µm≤Dᵥ50≤7 µm, 5 µm≤Dᵥ50≤8 µm, and 6 µm≤Dᵥ50≤9 µm. In this application, when the introduced secondary particles of lithium iron phosphate chemical system material have a small specific surface area and an appropriate median particle size, it is more beneficial to uniformly mix the secondary particles of lithium iron phosphate chemical system with the material of ternary chemical system, thereby improving processing of the mixed positive electrode material.

In some embodiments of this application, an average particle size d of primary particles forming the secondary particles of lithium iron phosphate chemical system satisfies 20 nm≤d≤800 nm. For example, d may satisfy: 300 nm≤d≤500 nm, further 300 nm≤d≤350 nm, 350 nm≤d≤400 nm, 400 nm≤d≤450 nm, and 450 nm≤d≤500 nm. In this application, when the particle size of the primary particles forming LFP secondary particles is controlled within the foregoing range, the material of ternary chemical system can be further prevented from deteriorated kinetic performance and low-temperature performance due to introduction of the LFP material secondary particles, and the mixed system can have better long-term life.

In some embodiments of this application, powder resistivity of the secondary particles of lithium iron phosphate chemical system is not more than 100 Ω·cm. Specifically, the powder resistivity may be: not more than 80 Ω·cm, not more than 75 Ω·cm, not more than 70 Ω·cm, not more than 65 Ω·cm, not more than 60 Ω·cm, not more than 55 Ω·cm, not more than 50 Ω·cm, not more than 45 Ω·cm, not more than 40 Ω·cm, not more than 30 Ω·cm, not more than 20 Ω·cm, or not more than 10 Ω·cm. In this application, resistance of a positive electrode plate can be effectively regulated by further limiting the powder resistivity of the secondary particles of lithium iron phosphate chemical system, thereby helping ensure cycling performance of lithium-ion batteries.

In some embodiments of this application, a mass percentage of the secondary particles of lithium iron phosphate chemical system is controlled to be 20%-70% given that mass of the mixed component is 100%. Specifically, the mass percentage of the secondary particles of lithium iron phosphate chemical system may be 20%-25%, 25%-35%, 35%-45%, 45%-55%, 55%-65%, or 65%-70%. In this application, a percentage of the secondary particles of lithium iron phosphate chemical system in the mixed positive electrode material is regulated to be within the foregoing range, and therefore energy density and safety of the battery can be further optimized.

In some embodiments of this application, the material of lithium iron phosphate chemical system can use a lithium-containing compound with a general formula LiFe₁₋ₓMₓPO₄, where 0<x≤0.1, and M may be selected from one or more of Cu, Mn, Cr, Zn, Pb, Ca, Co, Ni, Sr, or Ti.

The material of ternary chemical system is a material of lithium nickel cobalt manganate chemical system and/or a material of lithium nickel cobalt aluminate chemical system. A general formula of the material of lithium nickel cobalt manganate chemical system is LiNiₓMn_{y}Co_{1-x-y}O₂, where 1>x>0, 1>y>0, and x+y≤0.95; and a general formula of the material of lithium nickel cobalt manganate chemical system is LiNiₓCo_{y}Al_{1-x-y}O₂, where 1>x>0.6 and 0.4>y>0.1.

By controlling the specific surface area of the secondary particles of lithium iron phosphate chemical system, the mixed positive electrode material described in this application solves the problem of agglomeration occurring when the material of ternary chemical system is mixed with the material of lithium iron phosphate chemical system, thereby improving ease of processing of the mixed positive electrode material, making the slurry less prone to agglomeration and the two materials highly miscible. Therefore, stability of the slurry is enhanced, a maximum storage period of the slurry is increased, and filterability is improved. When the positive electrode plate is prepared by using the mixed positive electrode material of this application, the mixed component can be uniformly distributed on the positive electrode plate, which helps uniform distribution of electrode plate resistance, thereby improving electrochemical performance of the battery.

According to a second aspect, this application provides a positive electrode plate, including a positive electrode material layer containing the foregoing mixed positive electrode material.

In some embodiments of this application, a mass per unit area of the positive electrode material layer is 150-250 g/m². Specifically, a lower limit of the mass per unit area of the positive electrode material layer may be: not less than 150 g/m², not less than 160 g/m², not less than 170 g/m², not less than 180 g/m², not less than 190 g/m², not less than 200 g/m², not less than 210 g/m², not less than 220 g/m², not less than 230 g/m², or not less than 240 g/m². An upper limit of the mass per unit area of the positive electrode material layer may be: not higher than 160 g/m², not higher than 170 g/m², not higher than 180 g/m², not higher than 190 g/m², not higher than 200 g/m², not higher than 220 g/m², not higher than 210 g/m², not higher than 230 g/m², not higher than 240 g/m², or not higher than 250 g/m².

In some embodiments of this application, a compacted density of the positive electrode material layer is 2.6-3.5 g/cm³. Specifically, a lower limit of the compacted density of the positive electrode material layer may be 2.6 g/cm³, 2.7 g/cm³, 2.8 g/cm³, 2.9 g/cm³, 3 g/cm³, 3.1 g/cm³, 3.2 g/cm³, 3.3 g/cm³, or 3.4 g/cm³. An upper limit of the compacted density of the positive electrode material layer may be 2.7 g/cm³, 2.8 g/cm³, 2.9 g/cm³, 3 g/cm³, 3.1 g/cm³, 3.2 g/cm³, 3.3 g/cm³, 3.4 g/cm³, or 3.5 g/cm³.

In this application, by further adjusting the mass per unit area and compacted density of the positive electrode material layer, resistivity of the positive electrode plate and extractable capacity per unit area of the positive electrode plate can be regulated, thereby ensuring that the prepared battery has high kinetic performance and energy density.

In some embodiments of this application, the positive electrode plate further includes a conductive agent and a binder. Both the conductive agent and the binder are conventional materials in the art. For example, the conductive agent may be selected from at least one of carbon black, graphene, carbon nanotubes, Ketjen black, and carbon fibers, and the binder may be selected from at least one of polytetrafluoroethylene, polystyrene butadiene rubber, and sodium carboxymethyl cellulose. In a specific embodiment of this application, a mass ratio of the mixed positive electrode material, the conductive agent, and the binder is about (90-98):(1-5):(1-5), for example, 96.5:1.5:2, 92:2:3, 93:3:2, 97:5:1, 98:1:5, or 95:3.5:4.

Since the positive electrode plate of this application is prepared by using the mixed positive electrode material, the mixed positive electrode material can be uniformly distributed on the positive electrode plate, helping improve uniformity of electrode plate resistance and better satisfying electrochemical performance of lithium-ion batteries.

According to a third aspect, this application provides a preparation method of a positive electrode plate, including the following steps: mixing a mixed positive electrode material, filtering and collecting a slurry, applying the slurry onto a current collector, removing a solvent and then performing rolling and cutting to obtain a positive electrode plate.

The preparation method of this application uses the mixed positive electrode material of this application, helping make the mixed positive electrode material more uniformly distributed on the positive electrode plate, improving performance of the positive electrode plate and better satisfying electrochemical performance of lithium-ion batteries.

According to a fourth aspect, this application provides a battery, including the foregoing positive electrode plate.

In the positive electrode plate of this application, the mixed positive electrode material is uniformly distributed on the positive electrode plate, helping improve uniformity of electrode plate resistance, so that the prepared battery has higher energy density and better cycling performance. The battery of this application has high energy density and good electrochemical performance.

According to a fifth aspect, this application provides an apparatus, including the foregoing battery, where the battery is configured to provide power for the apparatus and/or serve as an energy storage unit for the apparatus, and the apparatus is selected from one or more of an electric vehicle, an electric boat, an electric tool, an electronic device, or an energy storage system.

In a specific embodiment of this application, the apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

Additional aspects and advantages of this application will be given in part in the following description, part of which will become apparent from the following description or from the practice of this application.

### BRIEF DESCRIPTION OF DRAWINGS

FIG. 1 is a SEM image of a positive electrode plate in Example 1 (Example 1 not falling under the scope of the invention);
FIG. 2 is a SEM image of a positive electrode plate prepared from a conventional single crystal 523 ternary material;
FIG. 3a and FIG. 3b are SEM images of different magnifications of a positive electrode plate prepared from LFP material secondary particles in an example of this application;
FIG. 4 is a schematic diagram of long diameter measurement of some primary particles in FIG. 3a;
FIG. 5 is a graph of charge and discharge curves of a lithium-ion battery in Example 1 (Example 1 not falling under the scope of the invention);
FIG. 6 is a graph of cycling capacity retention rate curves of the lithium-ion battery in Example 1 (Example 1 not falling under the scope of the invention) of this application;
FIG. 7 is a schematic diagram of the lithium-ion battery in Example 1 (Example 1 not falling under the scope of the invention); and
FIG. 8 is a schematic diagram of an embodiment of an apparatus using a lithium-ion battery as a power source.

### DETAILED DESCRIPTION OF EMBODIMENTS

At present, there have been studies using a material of lithium iron phosphate system mixed with a ternary system material as a positive electrode material to improve safety performance and cycle life of ternary system batteries. Since lithium iron phosphate has better structural stability than a ternary material, it has become a consensus in the industry that structural stability of a battery material system can be improved by mixing a small amount of lithium iron phosphate in a ternary positive electrode material. However, as two types of materials greatly differ in structure and properties, improper screening and mixing can cause unstable performance and quality of batteries due to a high defect rate of positive electrodes, and even deteriorate performance of the positive electrode material system and overall performance of the battery. The defect rate may have various effects. For example, poor miscibility between two materials leads to poor stability for a mixed slurry used for preparing an electrode plate, thus agglomeration easily occurs and the positive electrode material is unevenly distributed in an electrode plate active material layer, thereby deteriorating electrochemical performance of the battery.

According to a first aspect, this application provides a mixed positive electrode material, including a mixed component consisting of a material of lithium iron phosphate chemical system and a material of ternary chemical system, where the material of lithium iron phosphate chemical system is secondary particles of low specific surface area with an average specific surface area of 6 m²/g or less.

A fine particle has a large specific surface area, and a larger specific surface area means larger surface energy. Fine particles with large surface energy are easily combined together to cause agglomeration, due to interaction forces such as weak van der Waals force and hydrogen bond. To be specific, many fine particles combine for a second time to form larger secondary particles. In other words, fine primary particles are agglomerated in a certain way to become secondary particles. As is well known, agglomeration of particles may be classified into soft agglomeration or hard agglomeration. Generally, agglomeration caused by physical bonding (for example, the van der Waals force and intermolecular forces such as the hydrogen bond) is soft agglomeration, and agglomeration caused by chemical bonding is hard agglomeration. Soft agglomeration can be broken by mechanical force, but hard agglomeration is difficult to break. Therefore, product forms that can be referred to secondary particles are generally products obtained by processing primary particles through some artificial means to make them agglomerate. As one of the components of a positive electrode active material, the mixed positive electrode material of this application incorporates the material of lithium iron phosphate chemical system that mainly exists as secondary particles. This application requires the secondary particles to be stable (not easily breakable), and therefore, the secondary particles of lithium iron phosphate material used in this application should also be understood as the foregoing material particles agglomerated due to processing. In a specific embodiment, the secondary particles may be secondary particles resulting from hard agglomeration of nanoscale primary particles of lithium iron phosphate chemical system.

In this application, the material of lithium iron phosphate chemical system in the mixed positive electrode material mainly exists in the form of secondary particles, a small amount of primary particles are inevitably doped in the mixed component, or the like, which are all within the protection scope of this application.

In the art, chemical systems of positive electrode materials are categorized according to the type of active substance, and auxiliary materials doped or added thereto are not limited. For example, materials whose active substance is lithium iron phosphate (including element-doped lithium iron phosphate) can all be defined as materials of lithium iron phosphate chemical system, and materials whose active substance is typically a nickel cobalt lithium manganate system (generally NCM, for short) and a nickel cobalt lithium aluminate system (generally referred to as NCA) are defined as materials of ternary chemical system.

Generally, particles of lithium iron phosphate chemical system and particles of ternary chemical system particles have significantly different specific surface areas, so they are easy to agglomerate when mixed. The inventors have found through massive researches that secondary particles of lithium iron phosphate chemical system with a small average specific surface area may be used, specifically, with an average specific surface area within 6 m²/g. Further, the average specific surface area may be within 5 m²/g, within 4 m²/g, or within 3 m²/g. When the secondary particles of lithium iron phosphate chemical system whose specific surface area is within the foregoing range are mixed with the material of ternary chemical system, problems such as uneven coating on the positive electrode plate due to high viscosity of slurry caused by agglomeration during slurrying can be avoided, thereby improving feasibility of processing the mixed positive electrode material.

In this application, DᵥX is defined as follows: particles are arranged in ascending order by volume and numbered 1, 2, 3...n..., where a volumetric sum of the n^{th} particle and all particles whose volume is less than or equal to the volume of the n^{th} particle account for X% of the total volume of all particles, and a particle size value of the n^{th} particle is denoted as DᵥX.

Dᵥ50 refers to a particle size value of the corresponding n^{th} particle when a volumetric sum of the first n particles accounts for 50% of the total volume. In this application, Dᵥ50 is used to represent a median particle size. Dᵥ10 refers to a particle size value of the corresponding n^{th} particle when a volumetric sum of the first n particles accounts for 10% of the total volume. Dᵥ90 refers to a particle size value of the corresponding n^{th} particle when a volumetric sum of the first n particles accounts for 90% of the total volume.

In this application, a narrower particle size distribution of the secondary particles means a smaller Dᵥ90 and a larger Dᵥ10, which is more beneficial for the secondary particles to fit with the material of ternary chemical system. For example, when the particle size distribution of the secondary particles satisfies 0.1≤Dᵥ50/(Dᵥ90-Dᵥ10)≤10, further 0.3≤Dᵥ50/(Dᵥ90-Dᵥ10)≤5, and still further 0.5≤Dᵥ50/(Dᵥ90-Dᵥ10)≤1, the obtained mixed positive electrode material is more favorable for forming a more uniform mixed positive electrode slurry during slurrying.

When Dᵥ10 is too small, small particles may agglomerate. When Dᵥ90 is too large, a filter element of a lithium-ion battery slurry production device may be blocked, and it is impossible to allow good filling of and fit with ternary material particles with a smaller particle size. In a specific embodiment of this application, Dᵥ10 and Dᵥ90 can be further defined to control proportions of particles with small particle sizes and particles with large particle sizes, so that a mixed system of the secondary particles of lithium iron phosphate chemical system and the material of ternary chemical system can be further optimized. For example, the particle size distribution of secondary particles may satisfy Dᵥ10≥0.6 µm and Dᵥ90≤30 µm, for example, Dᵥ10≥0.8 µm and Dᵥ90≤25 µm, further for example, Dᵥ10≥1 µm and Dᵥ90≤20 µm; Dᵥ10≥1.2 µm and Dᵥ90≤25 µm; Dᵥ10≥2 µm and Dᵥ90≤22 µm; Dᵥ10≥3 µm and Dᵥ90≤18 µm; Dᵥ10≥4 µm and Dᵥ90≤15 µm; and Dᵥ10≥5 µm, and Dᵥ90≤12 µm.

In the positive electrode material of this application, when the introduced secondary particles of lithium iron phosphate chemical system material have an appropriate median particle size while satisfying a small specific surface area, it is more beneficial to uniformly mix the secondary particles of lithium iron phosphate chemical system with the material of ternary chemical system, thereby improving ease of processing of the mixed positive electrode material. In some embodiments of this application, the median particle size of the secondary particles satisfies 2 µm≤Dᵥ50≤9 µm, for example, 3 µm≤Dᵥ50≤6 µm, 2 µm≤Dᵥ50≤4 µm, 4 µm≤Dᵥ50≤7 µm, 5 µm≤Dᵥ50≤8 µm, or 6 µm≤Dᵥ50≤9 µm.

By controlling a particle size of the primary particles forming LFP secondary particles, electrochemical performance of lithium-ion batteries prepared from the mixed positive electrode material of this application can be further improved. An excessively small average particle size of the primary particles means poor storage performance and short cycle life of the mixed system. An excessively large average particle size of the primary particles means poor low-temperature performance and C-rate discharge performance of the mixed system. In a specific embodiment of this application, an average particle size d of the primary particles forming the secondary particles satisfies 20 nm≤d≤800 nm. For example, when d is controlled to satisfy 300 nm≤d≤500 nm, further 300 nm≤d≤350 nm, 350 nm≤d≤400 nm, 400 nm≤d≤450 nm, or 450 nm≤d≤500 nm, the material of ternary chemical system can be prevented from deteriorated kinetic performance and low-temperature performance due to introduction of the LFP material secondary particles, and the mixed system can have better long-term life.

A person skilled in the art can understand that powder resistivity of the LFP secondary particles may indirectly influence resistance of the positive electrode plate. Therefore, properties of the secondary particles of lithium iron phosphate chemical system can be further defined by controlling the powder resistivity, for example, by controlling powder resistivity of the secondary particles of lithium iron phosphate chemical system to be not more than 100 Ω·cm. Specifically, the powder resistivity may be: not more than 80 Ω·cm, not more than 75 Ω·cm, not more than 70 Ω·cm, not more than 65 Ω·cm, not more than 60 Ω·cm, not more than 55 Ω·cm, not more than 50 Ω·cm, not more than 45 Ω·cm, not more than 40 Ω·cm, not more than 30 Ω·cm, not more than 20 Ω·cm, or not more than 10 Ω·cm. In this application, when the powder resistivity of the secondary particles of lithium iron phosphate chemical system changes within the foregoing range, resistance of the positive electrode plate can be effectively regulated, thereby helping ensure cycling performance of lithium-on batteries.

In this application, battery performance can be further optimized by adjusting a percentage of the secondary particles of lithium iron phosphate chemical system in the mixed positive electrode material. Specifically, a mass percentage of the secondary particles of lithium iron phosphate chemical system is controlled to be 20%-70% given that mass of the mixed component is 100%. For example, 20%-25%, 25%-35%, 35%-45%, 45%-55%, 55%-65%, or 65%-70%. In this application, the percentage of the secondary particles of lithium iron phosphate chemical system in the mixed positive electrode material is regulated to be within the foregoing range, and therefore energy density and safety of the battery can be further ensured.

In this application, there is no limitation on selection of chemical system materials. For example, a material of lithium iron phosphate chemical system with a general formula LiFe₁₋ₓMₓPO₄ can be used, where 0<x≤0.1, and M may be selected from more than one of Cu, Mn, Cr, Zn, Pb, Ca, Co, Ni, Sr, or Ti.

In this application, the material of ternary chemical system is a material of lithium nickel cobalt manganate chemical system and/or a material of lithium nickel cobalt aluminate chemical system. A general formula of the material of lithium nickel cobalt manganate chemical system is LiNiₓMn_{y}Co_{1-x-y}O₂, where 1>x>0, 1>y>0, and x+y≤0.95; and a general formula of the material of lithium nickel cobalt manganate chemical system is LiNiₓCo_{y}Al_{1-x-y}O₂, where 1>x>0.6 and 0.4>y>0.1.

It is well known to those skilled in the art that during preparing particles of lithium iron phosphate chemical system, a carbon coating is further implemented on the particles to improve conductivity of the positive electrode material. The material of lithium iron phosphate chemical system of this application may be one with carbon coating on at least part of surface regions of at least part of the particles. For a preparation method of carbon-coated lithium iron phosphate, reference may be made to, for example, patent application CN101453030A, where a compound reaction system containing a lithium source, a phosphorus source, and a carbon source is used to obtain carbon-coated lithium iron phosphate particles by controlling thermodynamic and kinetic factors during reaction. It can be understood that conductivity can also be influenced by thickness and uniformity of the carbon coating. The conductivity is the best when the carbon coating on surfaces of all particles has a substantially uniform thickness.

In a specific embodiment of this application, a preparation method of the secondary particles of lithium iron phosphate chemical system is as follows:
(1) Use a ball mill to mix compounds of lithium source, iron source, and phosphorus source, random dopant, and a carbon source uniformly and pre-sinter the mixture at a low temperature under a protective gas to obtain a pre-sintered material. The phosphorus source and the iron source may be selected from a combination of one or two of iron phosphate or iron phosphate dihydrate, the lithium source is one or more of lithium phosphate, lithium carbonate, and lithium nitrate; the carbon source is selected from a combination of one or at least two of ascorbic acid, cellulose, polypropylene, epoxy resin, sucrose, glucose, fructose, citric acid, polyethylene glycol, starch, and phenol-formaldehyde resin. All of the materials are conventional raw materials in the art, which may be added in any ratio provided that this application can be implemented.
(2) Mix the pre-sintered material with a dispersant and a solvent (deionized water or methanol), and ultrafinely grind the mixture with a sand mill to obtain primary particles of lithium iron phosphate chemical system. In a specific embodiment, a small amount of carbon source may also be added during ultrafine grinding, so as to further improve conductivity of a subsequent sintered product and enhance coating.
(3) Spray-dry the ultrafinely ground primary particles of lithium iron phosphate chemical system, to produce monodisperse microspheres after the solvent is evaporated, and then sinter the microspheres under a nitrogen protective atmosphere for further reaction (reaction temperature being slightly higher than pre-sintering temperature) to obtain secondary particles of lithium iron phosphate chemical system. Vapor deposition may further be applied to form carbon coating on the surface of the secondary particles of lithium iron phosphate to improve conductivity of the material.

By controlling the specific surface area of the secondary particles of lithium iron phosphate chemical system, the mixed positive electrode material described in this application solves the problem of agglomeration occurring when the material of ternary chemical system is mixed with the material of lithium iron phosphate chemical system, thereby improving ease of processing of the mixed positive electrode material, making the slurry less prone to agglomeration and the two materials highly miscible. Therefore, stability of the slurry is enhanced, a maximum storage period of the slurry is increased, and filterability is improved. When the positive electrode plate is prepared by using the mixed positive electrode material of this application, the positive electrode material can be effectively controlled to be uniformly distributed on the positive electrode plate, helping uniform distribution of electrode plate resistance.

According to a second aspect, this application provides a positive electrode plate, including a positive electrode material layer containing the mixed positive electrode material.

In this application, resistivity of the positive electrode plate can be further regulated by controlling a mass per unit area of the positive electrode material and a compacted density of the positive electrode material. In some embodiments of this application, a mass per unit area of the positive electrode material layer is 150-250 g/m². Specifically, a lower limit of the mass per unit area of the positive electrode material layer may be: not less than 150 g/m², not less than 160 g/m², not less than 170 g/m², not less than 180 g/m², not less than 190 g/m², not less than 200 g/m², not less than 210 g/m², not less than 220 g/m², not less than 230 g/m², or not less than 240 g/m². An upper limit of the mass per unit area of the positive electrode material layer may be: not higher than 160 g/m², not higher than 170 g/m², not higher than 180 g/m², not higher than 190 g/m², not higher than 200 g/m², not higher than 220 g/m², not higher than 210 g/m², not higher than 230 g/m², not higher than 240 g/m², or not higher than 250 g/m².

In some embodiments of this application, a compacted density of the positive electrode material layer is 2.6-3.5 g/cm³. Specifically, a lower limit of the compacted density of the positive electrode material layer may be 2.6 g/cm³, 2.7 g/cm³, 2.8 g/cm³, 2.9 g/cm³, 3 g/cm³, 3.1 g/cm³, 3.2 g/cm³, 3.3 g/cm³, or 3.4 g/cm³. An upper limit of the compacted density of the positive electrode material layer may be 2.7 g/cm³, 2.8 g/cm³, 2.9 g/cm³, 3 g/cm3, 3.1 g/cm³, 3.2 g/cm³, 3.3 g/cm³, 3.4 g/cm³, or 3.5 g/cm³.

In this application, by further adjusting the mass per unit area and compacted density of the positive electrode material layer, resistivity of the positive electrode plate and extractable capacity per unit area of the positive electrode plate can be regulated, thereby ensuring that the prepared battery has high kinetic performance and energy density.

In some embodiments of this application, the positive electrode plate further includes a conductive agent and a binder. Both the conductive agent and the binder are conventional materials in the art. For example, the conductive agent may be selected from at least one of carbon black, graphene, carbon nanotubes, Ketjen black, and carbon fibers, and the binder may be selected from at least one of polytetrafluoroethylene, polystyrene butadiene rubber, and sodium carboxymethyl cellulose. In a specific embodiment of this application, a mass ratio of the mixed component, the conductive agent, and the binder is about (90-98):(1-5):(1-5), for example, 96.5:1.5:2, 92:2:3, 93:3:2, 97:5:1, 98:1:5, or 95:3.5:4.

In the positive electrode plate of this application, the mixed positive electrode material is uniformly distributed on the positive electrode plate, helping improve uniform distribution of the positive electrode plate resistance and better satisfy electrochemical performance of lithium-ion batteries.

According to a third aspect, this application provides a preparation method of a positive electrode plate, including the following steps: mixing a mixed positive electrode material, filtering and collecting a slurry, applying the slurry onto a current collector, removing a solvent and then performing rolling and cutting to obtain a positive electrode plate.

The preparation method of this application uses the mixed positive electrode material of this application, helping improve uniform distribution of the positive electrode material on the positive electrode plate, improving uniformity of the positive electrode plate resistance and better satisfying electrochemical performance of lithium-ion batteries.

According to a fourth aspect, this application provides a battery, including the foregoing positive electrode plate.

In the positive electrode plate of this application, the mixed positive electrode material is uniformly distributed on the positive electrode plate, helping improve uniform distribution of the electrode plate resistance, so that the prepared battery has higher energy density and better cycling performance.

The battery of this application has high energy density and good electrochemical performance.

According to a fifth aspect, this application provides an apparatus, including the foregoing battery, where the battery is configured to provide power for the apparatus and/or serve as an energy storage unit for the apparatus, and the apparatus is selected from one or more of an electric vehicle, an electric boat, an electric tool, an electronic device, or an energy storage system.

In a specific embodiment of this application, the apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

Additional aspects and advantages of this application will be given in part in the following description, part of which will become apparent from the following description or from the practice of this application.

Examples of this application are described in detail below. The examples are illustrative and intended to explain this application, but should not be construed as limitations on this application.

For the following examples and comparative examples, the following tests were performed:

### 1. Specific surface area test for secondary particles

Reference standard: GB/T 19587-2004 "Determination of specific surface area of solid substances by gas adsorption BET method"

As an example, the specific process was as follows:
(1) Take a given amount of sample: if lithium iron phosphate secondary particles are used, take 2.0-4 g; and if a ternary material is used, take 8.0-15.0 g.
(2) Put the sample into a sample tube, put the sample tube into a heating bag for degassing (the degassing condition is 200°C for 2 hours).
(3) After degassing is completed, when temperature at a degassing station drops to room temperature, remove the sample tube from the degassing station, and weigh the sample tube to calculate total mass of the sample.
(4) Put the sample tube into a test filling rod for BET test.

### 2. Particle size distribution test for secondary particles

Reference standard: GB/T 19077.1-2016

As an example, the specific process was as follows:
(1) Take a clean beaker and add a sample under test (a concentration of the sample is not limited provided that a shading degree is 8%-12%).
(2) Add about 20 g of alcohol solution, and externally sonicate for 5 min to ensure complete dispersion of the sample.
(3) turn on a sample injection system and then an optical path system, and preheat for 30 minutes for testing.
(4) After inputting corresponding parameters, the instrument preforms automatic measurements to obtain results.

### 3. SEM image acquisition

A cold-pressed electrode plate was taken and cut in a direction perpendicular to a large face of the electrode plate by an Ar particle beam to expose an end face which was scanned by a scanning electron microscope to produce an image.

### 4. Particle size test for primary particles

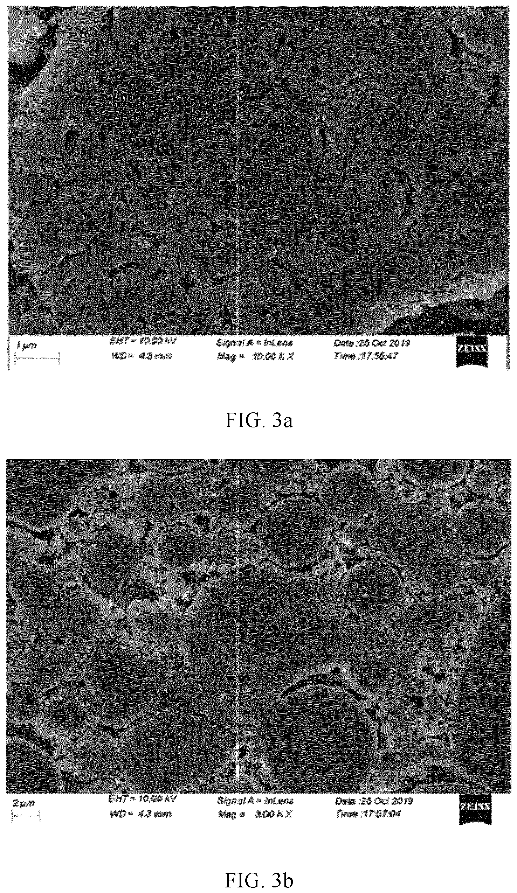

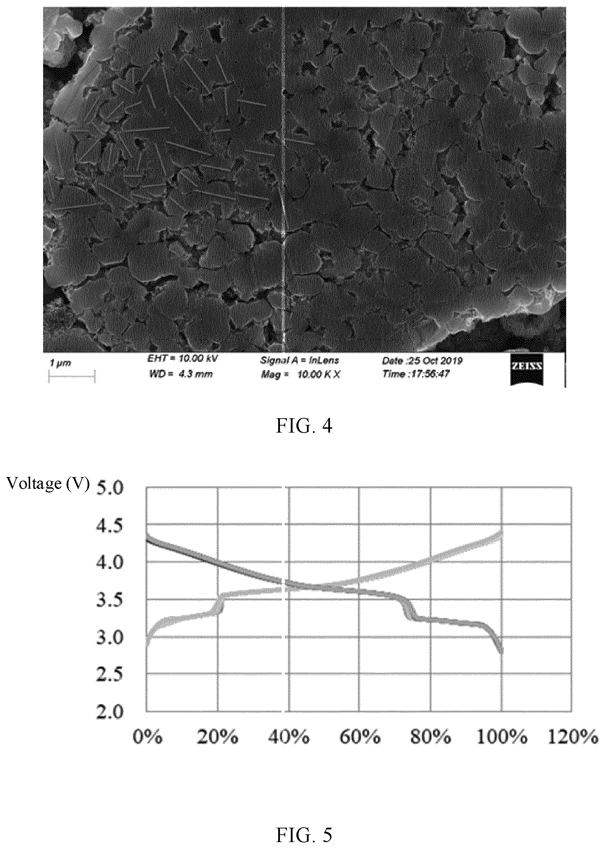

The particle size is determined by the long diameter measurement method: as shown in FIG. 3a and FIG. 4, lengths of the line segments marked in FIG. 4 are lengths of the primary particles in FIG. 3a in their long diameter directions. Diameters in a long axis direction of three groups of primary particles in FIG. 4 are measured according to dimensions shown in the SEM image, with at least 10 samples measured per group. An average value of the three groups was taken which is the particle size of the primary particles.

### 5. Powder resistivity test

Reference standard: GB/T 30835-2014 "Carbon Composite Lithium Iron Phosphate Positive Electrode Materials for Lithium-ion Battery"

Test method: place a mixed positive electrode material sample of given mass into a filling cup of a resistivity tester, compact the sample, and manually collect data and record test results of powder resistivity at different pressure points.

As an example, the specific process was as follows:
(1) Weigh sample: weigh a given amount of sample with mass controlled within 0.8-2.4 g.
(2) Feed sample: add the weighed sample to the filling cup, ensuring all the weighed samples are added to the filling cup.
(3) Apply pressure: compact the sample with an 8 MPa compacting pressure ensured.
(4) Collect data: collect powder resistivity data under the pressure of 8 MPa.

### 6. Slurry viscosity test method

Reference standard: GB/T 10247-2008 Viscosity measurement method with test temperature at 25°C

Test instrument: Brookfield DV2T viscometer with accuracy of ±1%FS.

Principle: When a rotor (cylinder) continuously rotates in a fluid, viscous torque of the fluid acts on the rotor (cylinder), and under given speed, dynamic viscosity of the fluid is proportional to the torque.

### 7. Test method for solid percentage of slurry

A given amount of lithium-ion battery slurry is weighed and dried at 120-125°C until its mass is constant, and a mass fraction of the dried sample to the original sample is taken as a solid percentage of the slurry.

As an example, the specific process was as follows:
(1) Take a fully stirred slurry sample (3.0±0.2 g) and place it in a pre-dried and weighed (error within 0.0002 g) weighing bottle, quickly cover the weighing bottle and weigh (error within 0.0002 g) it, and shake the bottle until the sample is flat.
(2) Open the bottle cap, put the weighing bottle and bottle cap into a drying oven that has been blasted in advance and heated to 120-125°C, and dry for 1 hour under blasting conditions.
(3) Take the weighing bottle out of the drying oven, immediately cover it with the cap, and cool it in the air for about 3 minutes and then place in a desiccator, and weigh it when cooling to room temperature.
(4) Calculate results: Solid percentage=(total mass of solids after drying/total weight of slurry before drying).

Test methods 1 to 7 are for tests performed synchronously based on ongoing preparation of lithium-ion batteries. If the lithium-ion batteries under test are already prepared, the following steps can be added:

### 1) Battery disassembly

a. The battery is fully discharged with a voltage of 2.0 V.
b. The battery is disassembled in a glove box, with the humidity in the glove box controlled within 2%.
c. The positive electrode plate in the battery is separated and soaked in DMC (dimethyl carbonate), with electrolyte on the positive electrode plate fully washed off.
d. The positive electrode plate is taken out and placed in a vacuum drying oven to dry at 80°C for 5 h.

### 2) Separation of active substance

a. The dried positive electrode plate active substance layer is separated from a current collector.
b. The separated active substance is ground to powder, and is dissolved into NMP (N-methylpyrrolidone) under heating conditions, then the solution is filtered and filter residue is collected, and the dissolution and filtration steps are repeated until the binder PVDF is fully removed.
c. The mixture with the binder sufficiently washed off is filtered and dried.
d. Separate conductive carbon.

The dry mixture powder is dispersed in a liquid medium (whose density is greater than 1.2 g/cm³, for example, m-nitro chloro benzene, bromobenzene, carbon tetrachloride, or the like), and a stir is given to make a substantially uniform mixture. After left there for a long enough time, the solution is layered with conductive carbon in the upper layer and the active substance material in the lower layer.

### 3) Separation of material of lithium iron phosphate chemical system and material of ternary chemical system

Principle: Difference in density between materials of ternary chemical system and materials of lithium iron phosphate chemical system is smaller than the difference between the positive electrode material and the conductive carbon, and therefore when separating a ternary positive electrode material and a lithium iron phosphate positive electrode material, the difference in surface wettability between the two also needs to be made use of: the material of lithium iron phosphate chemical system has a carbon coating on the surface which is hydrophobic; and the material of ternary chemical system has a relatively hydrophilic surface.

Specific steps are as follows.
a. The active substance material in the lower layer is dried to obtain a mixture powder.
b. Similar to a screening process for coal, a suitable liquid medium (such as water, ethylene glycol, or glycerol) and a suitable flotation agent (such as fat oil 190, fusel, or the like) are used for separation through bubble flotation.

The specific steps are as follows: take 1 kg of the mixed positive electrode material into the liquid medium, adjust to an appropriate solid percentage, and add the flotation agent. Stir the mixture to produce bubbles, collect the floating foam, wash and dry it to obtain the material of lithium iron phosphate chemical system; and collect the slurry at the bottom, and wash and dry the slurry to obtain the material of ternary chemical system.

c. The separated material of ternary chemical system and material of lithium iron phosphate chemical system are dried for subsequent characterization analysis.

8. Test of battery capacity and battery energy density (Note: in the case of a pure lithium iron phosphate system, the charge cut-off voltage is 3.65 V, and the discharge cut-off voltage is 2.0 V; and in the case of a pure ternary chemical system or a system mixed with ternary chemical system, the charge cut-off voltage is 4.35 V, and the discharge cut-off voltage is 2.8 V.)

In this application, the capacity is the cell capacity measured at 25°C under charge/discharge with constant current at 1/3C (where the charge/discharge current is rated capacity of a cell multiplied by C-rate, the rated capacity being the cell capacity established in the GBT certification document for the cell, or a battery module to which the cell belonged, or a battery pack to which the cell belonged) and within the operating voltage range specified in the GBT certification document. The specific process is as follows:
(1) Place the battery in an oven at 25°C and leave it there for 2 hours until the battery temperature is stable at 25°C.
(2) Discharge the battery with constant current at 1/3C to the discharge cut-off voltage.
(3) Pause for 5 minutes.
(4) Charge the battery with constant current at 1/3C to the charge cut-off voltage, and continue to charge it with constant voltage until the charging current is less than 0.05C.
(5) Pause for 5 minutes.
(6) Discharge the battery with constant current at 1/3C to the discharge cut-off voltage (this step obtains an actual test capacity of the battery, which can be combined with mass of cathode active substance to calculate extractable gram capacity of the positive electrode material; battery energy can be calculated by integrating a voltage-capacity curve, where energy value/battery mass value=mass energy density of battery).

### 9. Battery cycling performance test

This is to test the number of cycles when the capacity drops to 80% of the initial capacity (Note: in the case of a pure lithium iron phosphate system, the charge cut-off voltage is 3.65 V, and the discharge cut-off voltage is 2.5 V; and in the case of a pure ternary chemical system or a system mixed with ternary chemical system, the charge cut-off voltage is 4.35 V, and the discharge cut-off voltage is 2.8 V). The specific process is as follows:
(1) Run a cycling test procedure under 45°C and 1C/1C.
(2) Place the battery in an oven at 45°C and leave it there for 2 hours until the battery temperature is stable at 45°C.
(3) Charge the battery with constant current at 1C to the charge cut-off voltage and continue to charge it with constant voltage until the charging current is less than 0.05C and then cut off.
(4) Pause for 5 minutes.
(5) Discharge the battery with constant current at 1C to the discharge cut-off voltage.
(6) Pause for 5 minutes.

Steps (2) to (6) are one charge and discharge cycle of the battery. FIG. 5 shows the number of cycles when step 2 to step 6 are continuously repeated until the capacity drops to 80% of the initial capacity.

The PVDF used in the examples and the comparative examples of this application were purchased from Solvay Co., Ltd., model 5130, with an average relative molecular mass of 800,000-1,500,000.

Sodium carboxymethyl cellulose (CMC) was purchased from Foshan Remedial New Materials, lithium battery series CMC.

Separators were purchased from SEMCPRP, which were ceramic separators for lithium iron phosphate lithium-ion batteries.

Electrolyte was purchased from Guangdong TINCI, which was electrolyte for lithium iron phosphate lithium-ion batteries.

An illustration of the preparation method of the negative electrode plate of this application was given below.

Preparation of negative electrode plate: Artificial graphite, conductive carbon black, binder (styrene-butadiene rubber), and sodium carboxymethyl cellulose (CMC) were dissolved in a solvent at a ratio, and the mixture was stirred evenly to make a slurry. The slurry was evenly applied onto a copper foil current collector, followed by drying, cold rolling, slitting, and cutting to obtain a negative electrode plate.

This application is described in detail below with specific examples.

### Example 1 which is not part of the invention

Example 1 provided a mixed positive electrode material and a positive electrode plate and lithium-ion battery prepared therefrom.

### (1) Mixed positive electrode material

The mixed positive electrode material of Example 1 included a mixed component consisting of secondary particles of lithium iron phosphate chemical system and powder of ternary chemical system with a mass ratio of about 3:7. The specific composition parameters are given in Table 1.

A molecular formula of the secondary particles of lithium iron phosphate chemical system was LiFe_{0.98}Mn_{0.02}PO₄, their average specific surface area about 10 m²/g, Dᵥ50 about 5 µm, Dᵥ10 about 1.5 µm, and Dᵥ90 about 13.5 µm. It was calculated that Dᵥ50/(Dᵥ90-Dᵥ10)=0.42, and a particle size of primary particles forming secondary particles of lithium iron phosphate was about 400 nm.

A molecular formula of the powder of ternary chemical system was LiNi_{0.5}Co_{0.2}Mn_{.0.3}O₂, its specific surface area about 1.2 m²/g, and Dᵥ50 about 3 µm.

The mixed positive electrode material of Example 1 (Example 1 does not fall under the scope of the invention) further included conductive carbon black and PVDF, where a mass ratio of the mixed component, the conductive carbon black, and PVDF is about 96.5:1.5:2.

### (2) Positive electrode plate and preparation method thereof

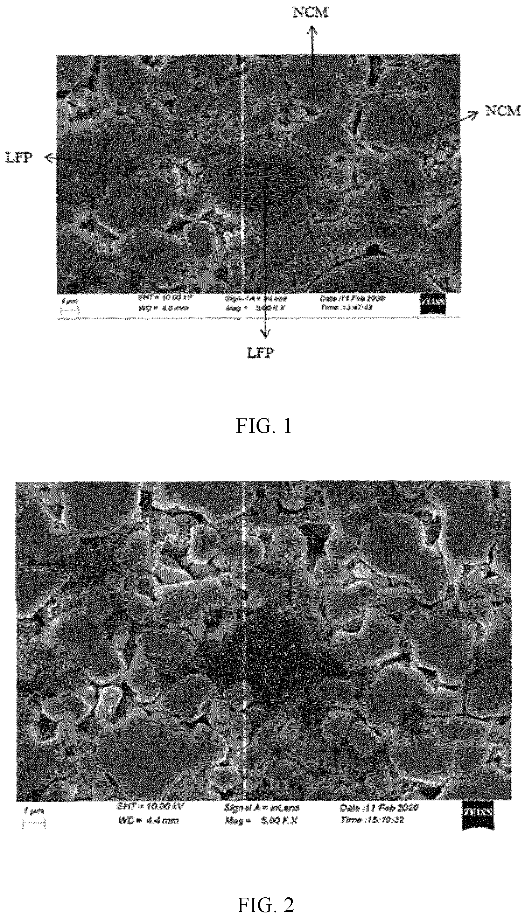

The mixed positive electrode material was mixed at about 500 r/min, then N-methylpyrrolidone (NMP) was added, and the mixture was evenly stirred at about 2000 r/min. Then the mixture was filtered with a filter screen of about 200 mesh to obtain a slurry with a viscosity of about 8000 mPa·S. A solid percentage of the slurry was then determined. The slurry was applied onto an aluminum foil with a thickness of about 13 µm, then evaporated to remove NMP. The coated foil was rolled and cut to obtain a positive electrode plate with a compacted density about 3.1 g/cm³ and a coating weight about 190 g/m². SEM results thereof are shown in FIG. 1.

FIG. 2 is a cross-sectional SEM image of a positive electrode plate prepared from a conventional single crystal 523 ternary positive electrode material. Although ternary material particles are uniformly distributed, there are many unfilled spaces between particles. FIG. 3a and FIG. 3b are SEM images of different magnifications of a positive electrode plate of LFP material secondary particles. Similarly, although the secondary particles are uniformly distributed, there are also many unfilled spaces between particles. In addition, a large number of nano-grain boundaries are inside the secondary particles which have compact structures.

As shown in FIG. 1, the LFP secondary particles and the ternary material in the mixed positive electrode material are uniformly and compactly distributed with no agglomeration. In addition, it can also be seen that there are obvious nano-grain boundaries inside the LFP secondary particles.

### (3) Lithium-ion battery and preparation method thereof

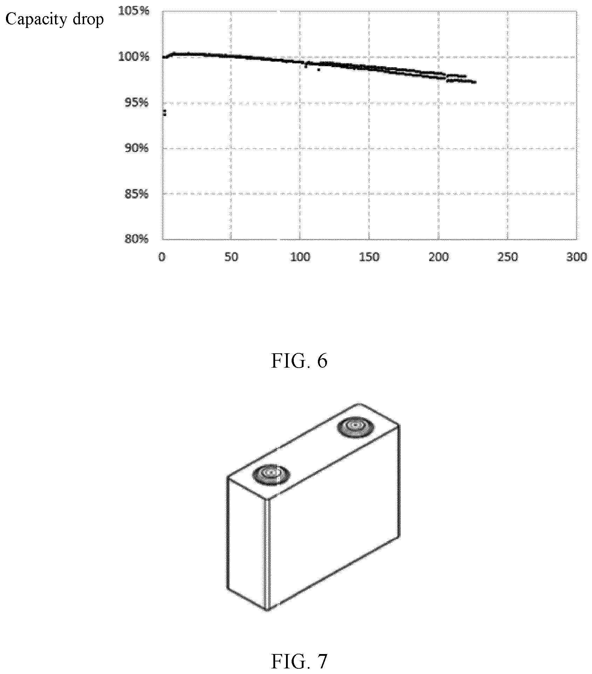

The positive electrode plate, the separator, and the negative electrode plate were stacked in turn. Then the stack was wound to obtain a bare cell, followed by packaging, electrolyte injection, formation and degassing, to obtain a lithium-ion battery, as shown in FIG. 7. Energy density and cycling performance of the lithium-ion battery were determined, results of which are given in Table 3, FIG. 5, and FIG. 6.

FIG. 5 shows curves of three charge-discharge cycles of the lithium-ion battery of Example 1 (Example 1 does not fall under the scope of the invention), which is obtained by testing the same lithium-ion battery for three consecutive cycles under the same test conditions. It can be seen that the three charge-discharge cycles do not differ much, so the three curves almost overlap with almost no capacity drop.

FIG. 6 shows the drop of capacity retention rate of the lithium-ion battery of Example 1 (Example 1 does not fall under the scope of the invention) in cycling. The two curves respectively record the drop of the capacity retention rate of two lithium-ion batteries in cycling. The two tests show almost the same drop without much difference. It can be seen from the trend of the curves that the capacity of the lithium-ion battery prepared in Example 1 exhibits an upward trend in the first few cycles. This is mainly because as the cycling proceeds, the material is continuously activated internally so that electrolyte is fully infiltrated, making an activation factor of the battery greater than a drop factor, so that the capacity is increased. As the cycling goes on, the capacity drop factor increases to be greater than the activation factor, so that the battery capacity continues to drop but at a slow speed. The capacity retention rate is still close to 98% after 225 cycles. It can be seen from FIG. 6 that the lithium-ion battery of Example 1 (Example 1 does not fall under the scope of the invention) has good cycling performance.

### Examples 2-25

Positive electrode plates and lithium-ion secondary batteries were prepared in Examples 2-25 by using the method given in Example 1 according to the specific components and proportions given in Table 1. Examples 2 and 7 to 25 are not part of the invention.

### Example 26

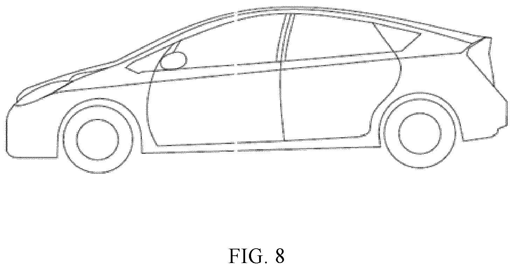

As shown in FIG. 8, Example 26 provided an apparatus. The apparatus was a battery electric vehicle, a hybrid electric vehicle, a plug-in hybrid electric vehicle, or the like. To meet requirements of the apparatus for high power and a high energy density of a lithium-ion battery, a battery pack or a battery module prepared from the foregoing lithium-ion battery may be used.

### Example 27

Example 27 provided a mobile device. The mobile device may be a mobile phone, a tablet computer, a notebook computer, or the like. Such device is generally required to be light and thin and uses a lithium-ion battery as its power source.

### Comparative Example 1

Comparative Example 1 provided a mixed positive electrode material and a positive electrode plate and lithium-ion battery prepared therefrom.

Comparative Example 1 and Example 2 had the same steps and parameters except that an average specific surface area of LiFe_{0.98}Mn_{0.02}PO₄ secondary particles in Comparative Example 1 was about 12 m²/g, and that a particle size of primary particles forming the LiFe_{0.98}Mn_{0.02}PO₄ secondary particles was about 10 nm.

### Comparative Example 2

Comparative Example 2 provided a mixed positive electrode material and a positive electrode plate and lithium-ion battery prepared therefrom.

Comparative Example 2 and Example 2 had the same steps and parameters except that the average specific surface area of LiFe_{0.98}Mn_{0.02}PO₄ secondary particles in Comparative Example 2 was about 17 m²/g.

### Comparative Example 3

Comparative Example 3 provided a mixed positive electrode material and a positive electrode plate and lithium-ion battery prepared therefrom.

Comparative Example 3 and Example 2 had the same steps and parameters except that the mixed positive electrode material of Comparative Example 3 included primary particles of lithium iron phosphate chemical system and powder of ternary chemical system with a mass ratio of about 3:7, where a specific surface area of LiFe_{0.98}Mn_{0.02}PO₄ primary particles was about 16m²/g, their Dᵥ50 about 1.1 µm, Dᵥ10 about 0.25 µm, and Dᵥ90 about 18.5 µm.

The specific parameters of the mixed components of Examples 1-25 and Comparative Examples 1-3 are given in Table 1.

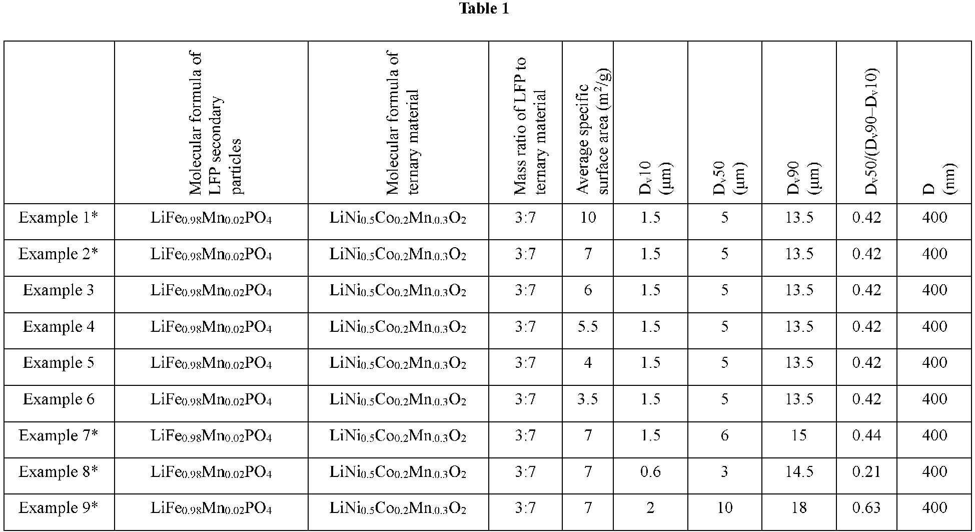

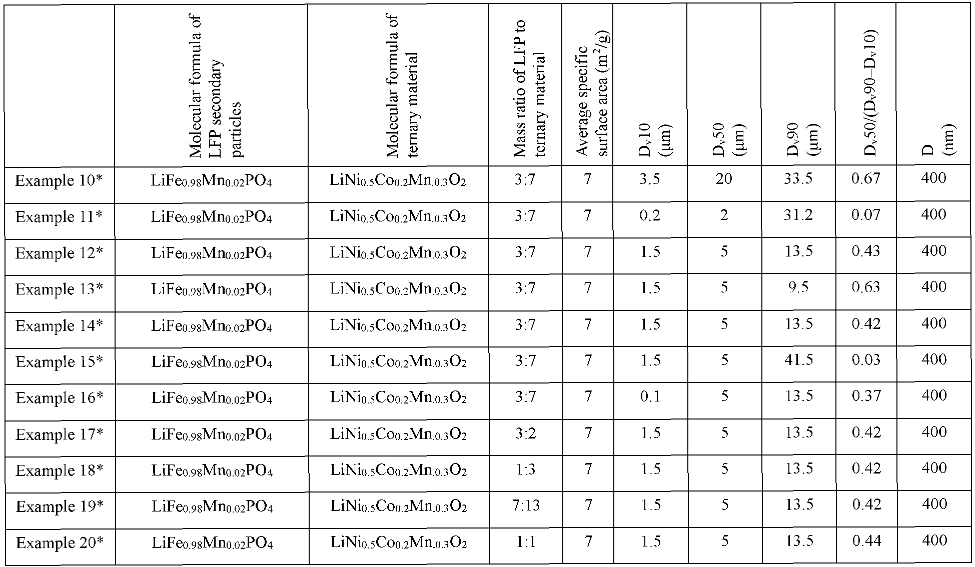

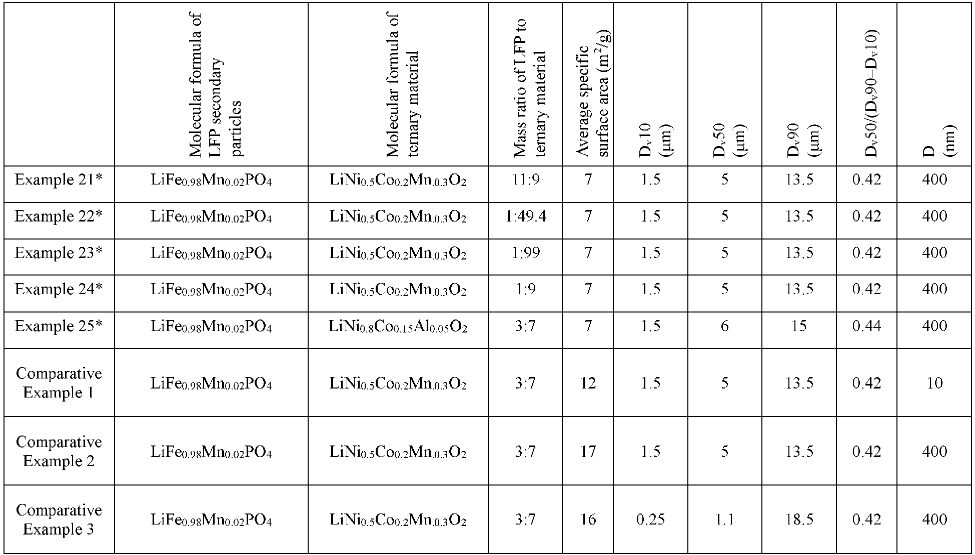

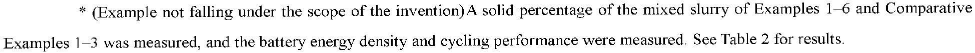

**Table 2**

| | Solid percentage of mixed slurry (%) | Battery energy density (Wh/kg) | Cycling performance (80% EOL at 45°C) |
|---|---|---|---|
| Example 1* | 64.0 | 225 | 1260 |
| Example 2* | 65.5 | 228 | 1390 |
| Example 3 | 66.0 | 230 | 1480 |
| Example 4 | 67.5 | 235 | 1350 |
| Example 5 | 68.0 | 220 | 1200 |
| Example 6 | 70.0 | 215 | 1100 |
| Comparative Example 1 | 55.0 | 185 | 800 |
| Comparative Example 2 | 53.0 | 165 | 600 |
| Comparative Example 3 | 46.0 | 160 | 350 |

| | | | |
|---|---|---|---|
| *(example not falling under the scope of the invention) | | | |

Resistance of the positive electrode plates of Examples 1-25 and Comparative Examples 1-3 and energy density and cycling performance of the lithium-on batteries including the positive electrode plates were measured. The results are given in Table 3.

**Table 3**

| | Positive electrode plate resistance (Ω) | Battery energy density (Wh/kg) | Cycling performance (80% EOL at 45°C) |
|---|---|---|---|
| Example 1* | 0.20 | 225 | 1260 |
| Example 2* | 0.50 | 228 | 1390 |
| Example 3 | 1.30 | 230 | 1480 |
| Example 4 | 1.50 | 235 | 1350 |
| Example 5 | 0.40 | 220 | 1200 |
| Example 6 | 3.50 | 215 | 1100 |
| Example 7* | 0.45 | 225 | 1300 |
| Example 8* | 0.65 | 220 | 1120 |
| Example 9* | 0.75 | 202 | 1130 |
| Example 10* | 1.3 | 195 | 1070 |
| Example 11* | 2.1 | 200 | 860 |
| Example 12* | 0.32 | 235 | 1450 |
| Example 13* | 0.38 | 238 | 1650 |
| Example 14* | 0.5 | 228 | 1390 |
| Example 15* | 0.9 | 215 | 930 |
| Example 16* | 2.2 | 185 | 840 |
| Example 17* | 0.5 | 228 | 1390 |
| Example 18* | 0.8 | 236 | 1230 |
| Example 19* | 0.35 | 224 | 1845 |
| Example 20* | 0.3 | 218 | 2060 |
| Example 21* | 0.25 | 204 | 2240 |
| Example 22* | 12 | 250 | 1150 |
| Example 23* | 50 | 254 | 1180 |
| Example 24* | 2 | 248 | 1360 |
| Example 25* | 0.45 | 225 | 1300 |
| Comparative Example 1 | 0.55 | 185 | 800 |
| Comparative Example 2 | 0.60 | 165 | 600 |
| Comparative Example 3 | 2.5 | 160 | 350 |

| | | | |
|---|---|---|---|
| *(example not falling under the scope of the invention) | | | |

During preparation of Comparative Examples 1-3, the slurry could not continuously and stably pass through the 150-mesh wire screen, and the agglomerated slurry was blocked on one side of the screen, so that the filtration could not be completed. In addition, viscosities of the slurry before and after mixing were tested, and it was found that after the slurry was mixed, the viscosity increased significantly with obviously worse fluidity, indicating occurrence of a quite serious agglomeration. In contrast, during preparation of Examples 1-25 (Examples 1, 2 and 7-25 do not fall under the scope of the invention), the mixed slurry could continuously and stably pass through the 150-mesh wire screen without blocking, indicating that no agglomeration occurred. The viscosity of the slurry was measured, and it was found that the viscosity of the mixed slurry did not change much compared with that before mixing.

Comparing the solid percentages of the mixed slurry of Examples 1-6 (Examples 1, 2 do not fall under the scope of the invention) and Comparative Examples 1-3, it can be seen that the specific surface areas of secondary particles in Examples 1-6 were not more than 10m²/g, and the solid percentages of the finally obtained mixed slurry in these examples were greater than those in Comparative Examples 1-3. According to analysis, this is mainly because the mixed positive electrode materials of Examples 1-6 (Examples 1, 2 do not fall under the scope of the invention) did not agglomerate during preparation, and therefore the slurry was still highly stable and easily processable under high solid percentages. In contrast, the mixed positive electrode materials of Comparative Examples 1-3 agglomerated during preparation. When the solid percentage increased, the agglomeration was more serious, so that the solid percentage of the finally prepared mixed positive electrode materials would also decrease. The slurry with low solid percentage was prone to film cracking and uneven coating thickness during coating, which affected energy density and cycling performance of the battery. In particular, as shown in Comparative Example 3, with Table 2 and Table 3 compared, when the mixed material used nano-scale lithium iron phosphate primary particles, the solid percentage of the mixed slurry was only 46%, which was much less than that of Examples 1-6, seriously affecting the energy density and cycling performance of the battery.

From comparison of Comparative Examples 1-6 and Comparative Examples 1-2 as in Table 3, it can be learned that, with the average specific surface area of LFP of the examples of this application, the energy density of the lithium-ion battery finally prepared was improved. Under the condition that the initial discharge capacity and the first cycle efficiency were basically the same, the number of cycles when the capacity dropped to 80% of the initial value increased significantly, much greater than that of the comparative examples. Therefore, cycling performance of the lithium-ion battery was improved significantly.

In comparison of Examples 7-9 and 12-14 and Examples 10, 11, 15 and 16 (Examples 7-16 do not fall under the scope of the invention), it can be seen that value distributions of Dᵥ50, Dᵥ10, Dᵥ90, and Dᵥ50/(Dᵥ90-Dᵥ10) affected both resistivity of the electrode plate and cycle life. For the mixed positive electrode materials of Examples 7-9 and 12-14 of this application, if values of Dᵥ50, Dᵥ10, Dᵥ90, and Dᵥ50/(Dᵥ90-Dᵥ10) were guaranteed to be in an appropriate range, the finally prepared positive electrode plate had relatively low resistance. Under the condition that the initial discharge capacity and the first cycle efficiency were basically the same, the number of cycles when the capacity dropped to 80% of the initial value increased significantly, indicating that the appropriate particle size distribution of secondary particles has a great influence on battery performance.

Comparing Examples 17-21 and Examples 22-24 (Examples 17-24 do not fall under the scope of the invention), it can be seen that a ratio of the mixed positive electrode material had a great influence on the resistance of the positive electrode plate and the energy density and cycling performance of the lithium battery. It can be seen from Examples 17-21 that as a mass fraction of lithium iron phosphate secondary particles increased, the resistance of the positive electrode plate decreased, the energy density of the battery decreased slightly, and the cycling performance increased. It can be seen from Examples 22-24 that adding excessive ternary material would affect the cycling performance of the battery with a limited increase of energy density.

In conclusion, by controlling the specific surface area of the secondary particles of lithium iron phosphate chemical system, the mixed positive electrode material described in this application solves the problem of agglomeration occurring when the material of ternary chemical system is mixed with the material of lithium iron phosphate chemical system, thereby improving ease of processing of the mixed positive electrode material, making the slurry less prone to agglomeration and the two materials highly miscible. When the positive electrode plate is prepared by using the mixed positive electrode material of this application, the positive electrode material can be uniformly distributed on the positive electrode plate, which helps uniform distribution of the electrode plate resistance, so that a lithium-ion battery prepared therefrom has higher energy density and better cycling performance.

In the description of this specification, the terms "an embodiment", "some embodiments", "an example", "a specific example", or "some examples" mean that a specific feature, structure, material or characteristic described with reference to the embodiment or example is included in at least one embodiment or example of this application. In this specification, illustrative expressions of these terms do not necessarily refer to the same embodiment or example.

## Claims

1. A mixed positive electrode material, comprising a mixed component consisting of a material of lithium iron phosphate chemical system and a material of ternary chemical system, the material of lithium iron phosphate chemical system being secondary particles with an average specific surface area between 3.5 and 6 m²/g, when determined as described in the application, wherein the material of ternary chemical system is a material of lithium nickel cobalt manganate chemical system and/or a material of lithium nickel cobalt aluminate chemical system, and a general formula of the material of lithium nickel cobalt manganate chemical system is LiNiₓMn_{y}Co_{1-x-y}O₂, wherein 1>x>0, 1>y>0, and x+y≤0.95; and a general formula of the material of lithium nickel cobalt aluminate chemical material system is LiNiₓCo_{y}Al_{1-x-y}O₂, wherein 1>x>0.6 and 0.4>y>0.1.

2. The mixed positive electrode material according to claim 1, wherein a particle size distribution of the secondary particles, when determined as described in the application, satisfies 0.1≤Dᵥ50/(Dᵥ90-Dᵥ10)≤10; and/or the particle size distribution of the secondary particles, when determined as described in the application satisfies Dᵥ10≥0.6 µm and Dᵥ90≤30 µm.

3. The mixed positive electrode material according to any one of claims 1 or 2, wherein a median particle size of the secondary particles satisfies 2 µm≤Dᵥ50≤9 µm; and/or the median particle size of the secondary particles satisfies 3 µm≤Dᵥ50≤6 µm.

4. The mixed positive electrode material according to any one of claims 1 to 3, wherein an average particle size d of primary particles forming the secondary particles satisfies 20 nm≤d≤800 nm.

5. The mixed positive electrode material according to any one of claims 1 to 4, wherein powder resistivity of the secondary particles of lithium iron phosphate chemical system, when determined as described in the application, is not more than 100 Ω·cm.

6. The mixed positive electrode material according to any one of claims 1 to 5, wherein a percentage of the secondary particles of lithium iron phosphate chemical system is 20%-70% given that mass of the mixed component is 100%.

7. The mixed positive electrode material according to claim 6, wherein the percentage of the secondary particles of lithium iron phosphate chemical system is 25%-45%.

8. The mixed positive electrode material according to any one of claims 1 to 7, wherein in the mixed component:
a general formula of the material of lithium iron phosphate chemical system is LiFe₁₋ₓMₓPO₄, wherein 0<x≤0.1, and M is selected from one or more of Cu, Mn, Cr, Zn, Pb, Ca, Co, Ni, Sr, and Ti.

9. A positive electrode plate, comprising a positive electrode material layer containing the mixed positive electrode material according to any one of claims 1 to 8.

10. The positive electrode plate according to claim 9, wherein a mass per unit area of the positive electrode material layer is 150-250 g/m², and/or
a compacted density of the positive electrode material layer is 2.6-3.5 g/cm³.

11. The positive electrode plate according to claim 9, wherein the positive electrode material layer further comprises a conductive agent and a binder, and a mass ratio of the mixed positive electrode material, the conductive agent, and the binder is (90-98):(1-5):(1-5).

12. A preparation method of the positive electrode plate according to any one of claims 9 to 10, comprising the following steps:
mixing the mixed positive electrode material according to any one of claims 1 to 8;
filtering and collecting a slurry;
applying the slurry onto a current collector; and
removing a solvent and then performing rolling and cutting,
to obtain a positive electrode plate.

13. A battery, comprising the positive electrode plate according to any one of claims 9 to 11.

14. An apparatus, comprising the battery according to claim 13, wherein the battery is configured to provide power for the apparatus and/or serve as an energy storage unit for the apparatus, and the apparatus is selected from one or more of an electric vehicle, an electric boat, an electric tool, an electronic device, or an energy storage system.

## Patentansprüche

1. Gemischtes positives Elektrodenmaterial, umfassend eine gemischte Komponente, die aus einem Material eines Lithium-Eisenphosphat-Chemiesystems und einem Material eines ternären Chemiesystems besteht, wobei das Material des Lithium-Eisenphosphat-Chemiesystems Sekundärpartikel mit einer durchschnittlichen spezifischen Oberfläche zwischen 3,5 und 6 m²/g aufweist, bestimmt wie in der Anmeldung beschrieben, wobei das Material des ternären Chemiesystems ein Material eines Lithium-Nickel-Kobalt-Manganat-Chemiesystems und/oder ein Material eines Lithium-Nickel-Kobalt-Aluminat-Chemiesystems ist, und eine allgemeine Formel des Materials des Lithium-Nickel-Kobalt-Manganat-Chemiesystems LiNiₓMn_{y}Co_{1-x-y}O₂ ist, wobei 1 > x > 0, 1 > y > 0 und x+y ≤ 0,95; und eine allgemeine Formel des Materials des Lithium-Nickel-Kobalt-Aluminat-Chemiesystems LiNiₓCo_{y}Al_{1-x-y}O₂ ist, wobei 1 > x > 0,6 und 0,4 > y > 0,1.

2. Gemischtes positives Elektrodenmaterial nach Anspruch 1, wobei eine Partikelgrößenverteilung der Sekundärpartikel, bestimmt wie in der Anmeldung beschrieben, 0,1 ≤ Dᵥ50/(Dᵥ90-Dᵥ10) ≤ 10 erfüllt; und/oder wobei die Partikelgrößenverteilung der Sekundärpartikel, bestimmt wie in der Anmeldung beschrieben, Dᵥ10 ≥ 0,6 µm und Dᵥ90 ≤ 30 µm erfüllt.

3. Gemischtes positives Elektrodenmaterial nach einem der Ansprüche 1 oder 2, wobei eine mittlere Partikelgröße der Sekundärpartikel 2 µm ≤ Dᵥ50 ≤ 9 µm erfüllt;
und/oder wobei die mittlere Partikelgröße der Sekundärpartikel 3 µm ≤ Dᵥ50 ≤ 6 µm erfüllt.

4. Gemischtes positives Elektrodenmaterial nach einem der Ansprüche 1 bis 3, wobei eine durchschnittliche Partikelgröße d von Primärpartikeln, die die Sekundärpartikel bilden, 20 nm ≤ d ≤ nm erfüllt.

5. Gemischtes positives Elektrodenmaterial nach einem der Ansprüche 1 bis 4, wobei der Pulverwiderstand der Sekundärpartikel des Lithium-Eisenphosphat-Chemiesystems, bestimmt wie in der Anmeldung beschrieben, nicht mehr als 100 Ω · cm beträgt.

6. Gemischtes positives Elektrodenmaterial nach einem der Ansprüche 1 bis 5, wobei ein Anteil der Sekundärpartikel des Lithium-Eisenphosphat-Chemiesystems 20 % bis 70 % beträgt, wobei die Masse der gemischten Komponente 100 % ist.

7. Gemischtes positives Elektrodenmaterial nach Anspruch 6, wobei der Anteil der Sekundärpartikel des Lithium-Eisenphosphat-Chemiesystems 25 % bis 45 % beträgt.

8. Gemischtes positives Elektrodenmaterial nach einem der Ansprüche 1 bis 7, wobei in der gemischten Komponente:
eine allgemeine Formel des Materials des Lithium-Eisenphosphat-Chemiesystems LiFe₁₋ₓMₓPO₄ ist, wobei 0 < x ≤ 0,1 und M aus einem oder mehreren von Cu, Mn, Cr, Zn, Pb, Ca, Co, Ni, Sr und Ti ausgewählt ist.

9. Positive Elektrodenplatte, umfassend eine positive Elektrodenmaterialschicht, die das gemischte positive Elektrodenmaterial nach einem der Ansprüche 1 bis 8 enthält.

10. Positive Elektrodenplatte nach Anspruch 9, wobei eine Masse pro Flächeneinheit der positiven Elektrodenmaterialschicht 150-250 g/m² beträgt, und/oder
wobei eine kalandrierte Dichte der positiven Elektrodenmaterialschicht 2,6-3,5 g/cm³ beträgt.

11. Positive Elektrodenplatte nach Anspruch 9, wobei die positive Elektrodenmaterialschicht ferner ein leitfähiges Mittel und ein Bindemittel umfasst und ein Massenverhältnis des gemischten positiven Elektrodenmaterials, des leitfähigen Mittels und des Bindemittels (90-98):(1-5):(1-5) ist.

12. Herstellungsverfahren der positiven Elektrodenplatte nach einem der Ansprüche 9 bis 10, umfassend die folgenden Schritte:
Mischen des gemischten positiven Elektrodenmaterials nach einem der Ansprüche 1 bis 8, Filtrieren und Sammeln einer Aufschlämmung;
Aufbringen der Aufschlämmung auf einen Stromableiter; und
Entfernen eines Lösungsmittels und anschließendes Walzen und Schneiden, um eine positive Elektrodenplatte zu erhalten.

13. Batterie, umfassend die positive Elektrodenplatte nach einem der Ansprüche 9 bis 11.

14. Vorrichtung, umfassend die Batterie nach Anspruch 13, wobei die Batterie dazu eingerichtet ist, die Vorrichtung mit Energie zu versorgen und/oder als Energiespeichereinheit für die Vorrichtung zu dienen, und wobei die Vorrichtung aus einem oder mehreren von einem Elektrofahrzeug, einem Elektroboot, einem Elektrowerkzeug, einem elektronischen Gerät oder einem Energiespeichersystem ausgewählt ist.

## Revendications

1. Matériau mixte d'électrode positive, comprenant un composant mixte constitué d'un matériau d'un système chimique au phosphate de fer lithié et d'un matériau d'un système chimique ternaire, le matériau du système chimique au phosphate de fer lithié étant des particules secondaires présentant une surface spécifique moyenne comprise entre 3,5 et 6 m²/g, lorsqu'elle est déterminée comme décrit dans la demande, dans lequel le matériau du système chimique ternaire est un matériau d'un système chimique au nickel-cobalt-manganate de lithium et/ou un matériau d'un système chimique au nickel-cobalt-aluminate de lithium, et une formule générale du matériau du système chimique au nickel-cobalt-manganate de lithium est LiNiₓMn_{y}Co_{1-x-y}O₂, dans laquelle 1 > x > 0, 1 > y > 0, et x+y ≤ 0,95 ; et une formule générale du matériau du système chimique au nickel-cobalt-aluminate de lithium est LiNiₓCO_{y}Al_{1-x-y}O₂, dans laquelle 1 > x > 0,6 et 0,4 > y > 0,1.

2. Matériau mixte d'électrode positive selon la revendication 1, dans lequel une distribution granulométrique des particules secondaires, lorsqu'elle est déterminée comme décrit dans la demande, satisfait à 0,1 ≤ Dᵥ50/(Dᵥ90-Dᵥ10) ≤ 10 ; et/ou la distribution granulométrique des particules secondaires, lorsqu'elle est déterminée comme décrit dans la demande, satisfait à Dᵥ10 ≥ 0,6 µm et Dᵥ90 ≤ 30 µm.

3. Matériau mixte d'électrode positive selon l'une quelconque des revendications 1 ou 2, dans lequel une taille médiane des particules secondaires satisfait à 2 µm ≤ Dᵥ50 ≤ 9 µm ;
et/ou la taille médiane des particules secondaires satisfait à 3 µm ≤ Dᵥ50 ≤ 6 µm.

4. Matériau mixte d'électrode positive selon l'une quelconque des revendications 1 à 3, dans lequel une taille moyenne de particule d des particules primaires formant les particules secondaires satisfait à 20 nm ≤ d ≤ nm.

5. Matériau mixte d'électrode positive selon l'une quelconque des revendications 1 à 4, dans lequel la résistivité en poudre des particules secondaires du système chimique au phosphate de fer lithié, lorsqu'elle est déterminée comme décrit dans la demande, n'est pas supérieure à 100 Ω · cm.

6. Matériau mixte d'électrode positive selon l'une quelconque des revendications 1 à 5, dans lequel une proportion des particules secondaires du système chimique au phosphate de fer lithié est de 20 % à 70 %, étant donné que la masse du composant mixte est de 100 %.

7. Matériau mixte d'électrode positive selon la revendication 6, dans lequel la proportion des particules secondaires du système chimique au phosphate de fer lithié est de 25 % à 45 %.

8. Matériau mixte d'électrode positive selon l'une quelconque des revendications 1 à 7, dans lequel, dans le composant mixte :
une formule générale du matériau du système chimique au phosphate de fer lithié est LiFe₁₋ₓMₓPO₄, dans laquelle 0 < x ≤ 0,1, et M est sélectionné parmi un ou plusieurs de Cu, Mn, Cr, Zn, Pb, Ca, Co, Ni, Sr et Ti.

9. Plaque d'électrode positive, comprenant une couche de matériau d'électrode positive contenant le matériau mixte d'électrode positive selon l'une quelconque des revendications 1 à 8.

10. Plaque d'électrode positive selon la revendication 9, dans laquelle une masse par unité de surface de la couche de matériau d'électrode positive est de 150 à 250 g/m², et/ou
une densité compactée de la couche de matériau d'électrode positive est de 2,6 à 3,5 g/cm³.

11. Plaque d'électrode positive selon la revendication 9, dans laquelle la couche de matériau d'électrode positive comprend en outre un agent conducteur et un liant, et un rapport massique du matériau mixte d'électrode positive, de l'agent conducteur et du liant est de (90-98):(1-5):(1-5).

12. Procédé de préparation de la plaque d'électrode positive selon l'une quelconque des revendications 9 à 10, comprenant les étapes suivantes :
mélanger le matériau mixte d'électrode positive selon l'une quelconque des revendications 1 à 8, filtrer et recueillir une suspension ;
appliquer la suspension sur un collecteur de courant ; et
éliminer un solvant puis effectuer un laminage et une découpe, afin d'obtenir une plaque d'électrode positive.

13. Batterie, comprenant la plaque d'électrode positive selon l'une quelconque des revendications 9 à 11.

14. Appareil, comprenant la batterie selon la revendication 13, dans lequel la batterie est configurée pour fournir de l'énergie à l'appareil et/ou servir d'unité de stockage d'énergie pour l'appareil, et l'appareil est sélectionné parmi un ou plusieurs d'un véhicule électrique, d'un bateau électrique, d'un outil électrique, d'un dispositif électronique ou d'un système de stockage d'énergie.
